# EUROPÄISCHE PATENTSCHRIFT

(11) **EP 0 610 831 B1**
(45) Veröffentlichungstag und Bekanntmachung des Hinweises auf die Patenterteilung: **06.08.1997**
(21) Anmeldenummer: 94101736.0
(22) Anmeldetag: 04.02.1994
(51) Int. Cl.: C09D 183/04, C09D 183/10, C09D 183/14

(54) **Beschichtungsmaterial und Verfahren zur Herstellung funktioneller Beschichtungen**
Coating composition and a process for preparing coatings with functional groups
Composition de revêtement et un procédé de préparation de revêtements ayant des groupes fonctionnels

(30) Priorität: 08.02.1993 DE 4303570
(43) Veröffentlichungstag der Anmeldung: 17.08.1994
(73) Patentinhaber: FRAUNHOFER-GESELLSCHAFT ZUR FÖRDERUNG DER ANGEWANDTEN FORSCHUNG E.V., 80636 München (DE)
(72) Erfinder: Kron, Johanna, Dr., D-97299 Zell (DE); Schottner, Gerhard, Dr., D-91560 Heilsbronn (DE); Greiwe, Klaus, Dr., D-97070 Würzburg (DE)

(56) Entgegenhaltungen:
- EP-A- 0 006 705
- EP-A- 0 358 011
- EP-A- 0 365 009
- EP-A- 0 388 858
- EP-A- 0 471 301
- Datenbank "Chemical Abstracts" (Datenanbieter: STN), "access n.": 111: 80 069, Colombus, OH, US & JP-A-1 004 664 (KYOWA GAS CHEM. IND. CO.,LTD) 9.September 1989
- Datenbank "Chemical Abstracts" (Datenanbieter: STN), "access n.": 111: 80 069, Colombus, OH, US & JP-A-1 004 664

## Beschreibung

Die Erfindung betrifft ein Verfahren zur Herstellung funktioneller Beschichtungen aus organofunktionellen Silanen und einem Beschichtungsmaterial zur Herstellung von beschichteten Substraten.

Thermisch aushärtbare Beschichtungsmaterialien für Kunststoffoberflächen auf Polysiloxan-Basis, die zu verbesserten mechanischen Eigenschaften wie Kratzfestigkeit und Abriebbeständigkeit führen, werden bereits seit längerer Zeit kommerziell genutzt (siehe J. Hennig "Kratzfest beschichtete Kunststoffe" in Kunststoffe 71 (1981), S. 103). Die Anwendung der dort beschriebenen Beschichtungsmaterialien wird jedoch teilweise durch die geringe thermische Beständigkeit der organischen Polymerwerkstoffe eingeschränkt, so daß für thermisch weniger belastbare thermoplastische Kunststoffe, wie beispielsweise ABS, PS PVC, PUR, PE, PP, etc., daher UV-aushärtbare Beschichtungsmaterialien entwickelt wurden (siehe K. Greiwe in "Better Ceramics through chemistry V", Hrsg.: M.J. Hampden-Smith, W.G. Klemperer und C.J. Brinker, "Characterisation of hydrolysed Alkoxysilanes and Zirconiumalkoxides for the development of UV-curable scratch-resistant coatings" in Mat. Res. Soc. Symp. Proc. Vol. 271 (1992), S. 725). Diese UV-aushärtbaren Materialien auf Polysiloxan-Basis sind aufgrund ihrer schnelleren Aushärtung und ihrer geringeren thermischen Belastung für die oben angegebenen Kunststoffe für bestimmte Anwendungsfälle durchaus geeignet, decken jedoch nicht das ganze Anwendungsspektrum für funktionelle Schutzschichten auf Polysiloxan-Basis ab.

Die **DE 40 25 215** beschreibt eine alkalistabile und abriebbeständige Beschichtung auf Polysiloxan-Basis. Das Material wird erhalten durch Umsetzung von organischen Epoxiden mit aminofunktionellen Alkoxysilanen. Das Beschichtungsmaterial weist jedoch nur eine geringe Topfzeit aus und muß daher nach der Herstellung relativ schnell eingesetzt werden.

Die **DE 38 28 098 A1** beschreibt einen Lack und ein Verfahren zur Herstellung kratzfester Beschichtungen. Obwohl dieses Verfahren zu Beschichtungen führt, die bezüglich vieler Eigenschaften zufriedenstellende Ergebnisse liefern (z.B. Kratzfestigkeit, Transparenz, gute Primärhaftung auf Substraten), sind diese Beschichtungen für eine Reihe von Anwendungen noch verbesserungsbedürftig.

Die Hauptnachteile dieser Systeme sind die mangelnde dauerhafte Haftung der so hergestellten Beschichtungen auf Substraten sowie eine ungenügende Topfzeit der Lacke.

Bei unterschiedlichen korrosiven Belastungen (vor allem in alkalischen wäßrigen Lösungen) vermindert sich die Haftung derartiger Beschichtungen zusehends bis hin zum vollständigen Ablösen der Schicht, und der Schutz (z.B. Abrieb- und Korrosionsschutz) für das jeweilige Substrat ist somit nicht mehr gewährleistet. Die nach der DE 38 28 098 A1 dargestellten Lacke besitzen eine so geringe Topfzeit, daß sie - will man die beschriebenen guten Eigenschaften erhalten - innerhalb weniger Stunden (max. 8 h) verarbeitet und somit direkt vor Ort hergestellt werden müssen.

Hier setzt die vorliegende Erfindung ein, deren Aufgabe es ist, ausgehend von der DE 38 28 098, ein Beschichtungsmaterial und ein Verfahren zur Herstellung von funktionellen Beschichtungen auf Substraten zur Verfügung zu stellen, das gegenüber den bekannten Beschichtungsmaterialien eine dauernde Haftung auch unter ungünstigen korrosiven Bedingungen aufweist, wobei gleichzeitig gute Kratz- und Abriebfestigkeiten gefordert sind. Das Beschichtungsmaterial soll dabei gleichzeitig eine verlängerte Topfzeit aufweisen, so daß es über einen längeren Zeitraum (bis zu mehreren Wochen) hin verarbeitet werden kann.

Die Lösung dieser Aufgabe erfolgt hinsichtlich des Verfahrens durch die kennzeichnenden Merkmale des Anspruches 1, hinsichtlich der beschichteten Substrate durch die kennzeichnenden Merkmale des Anspruches 11 und in bezug auf das Beschichtungsmaterial durch die Merkmale des Anspruches 12.

Die Unteransprüche geben vorteilhafte Weiterbildungen an.

Gegenstand der Erfindung ist ein Verfahren zur Herstellung von beschichteten Substraten, das sich dadurch auszeichnet, daß man in einem ersten Schritt eine hydrolytische Kondensation eines organofunktionellen vernetzbaren Silans der allgemeinen Formel II mit der Verbindung der allgemeinen Formel III, gegebenenfalls in Anwesenheit des organofunktionellen Silans der Formel I, und gegebenenfalls eines oder mehrerer in dem Reaktionsmedium löslicher schwerflüchtiger Oxide durchführt. In einem zweiten Schritt wird dann zu diesem hydrolytischen Kondensat ein vernetzbares organisches Präpolymer des entsprechenden Restes R''' zugegeben. Dieses entstehende Beschichtungsmaterial wird dann in einem weiteren Schritt auf ein Substrat aufgebracht und ausgehärtet.

Erfindungswesentlich dabei ist, daß durch die Verwendung des vernetzbaren organischen Silans der allgemeinen Formel II (Komponente 1) in Verbindung mit dem vernetzbaren Präpolymer eine zusätzliche organische Quervernetzung eintritt. Überraschenderweise hat sich gezeigt, daß diese Quervernetzung dafür verantwortlich ist, daß eine ausgezeichnete Dauerhaftung, auch bei gleichzeitiger korrosiver Einwirkung, erreicht wird. Gleichzeitig wird eine deutliche Verlängerung der Topfzeit erreicht. Nach der bevorzugten Ausführungsform nach Anspruch 2 ist es besonders vorteilhaft, wenn die Metallverbindung der allgemeinen Formel III (Komponente 2) in chelatisierter Form eingesetzt wird. Dadurch wird eine nochmalige wesentliche Verlängerung der Topfzeit möglich. Durch diese Maßnahme bleibt nun das Beschichtungsmaterial selbst über mehrere Wochen verarbeitbar.

Nach einer bevorzugten Ausführungsform ist es vorteilhaft, wenn die Viskosität des Beschichtungsmaterials auf einen Wert von 5 bis 50 m Pa.s eingestellt wird. Entscheidend bei dem vorliegenden Verfahren zur Beschichtung von Substraten ist demnach, daß das organofunktionelle Silan der allgemeinen Formel II durch eine zusätzliche organische Quervernetzung mit Hilfe eines rein organischen vernetzbaren Präpolymers vernetzt wird. Für die Quervernetzung sind dabei sowohl der Rest R''' als auch die entsprechenden Substituenten des organofunktionellen Silans der allgemeinen Formel II verantwortlich. Die Quervernetzung kann deshalb von dem Rest R''' oder von dem Substituenten des Restes R''' ausgehen. Bevorzugt ist es, wenn die Vernetzung vom Substituenten ausgeht.

Die Gruppen X in der allgemeinen Formel I und II, die gleich oder verschieden sein können, können Wasserstoff, Halogen, Alkoxy, Acyloxy, Alkylcarbonyl, Alkoxycarbonyl oder NR''₂ bedeuten, wobei R'' Wasserstoff oder Alkyl ist.

Die Reste R' (nicht vernetzbar), die gleich oder verschieden sein können, sind entweder Alkyl, Aryl, Arylalkyl oder Alkylaryl. Diese Reste können durch O- oder S-Atome oder die Gruppe NR'' unterbrochen sein und einen oder mehrere nicht vernetzbare Substituenten aus der Gruppe der Halogene und der gegebenenfalls substituierten Amid-, Aldehyd-, Keto-, Alkylcarbonyl-, Carboxy-, Cyano-, Alkoxy-, Alkoxycarbonyl-Gruppen tragen. Alkylreste sind z.B. geradekettige, verzweigte oder zyklische Reste mit 1 bis 20, vorzugsweise 1 bis 10 Kohlenstoffatomen und insbesondere niedere Alkylreste mit 1 bis 6, vorzugsweise 1 bis 4 Kohlenstoffatomen. Spezielle Beispiele sind Methyl, Ethyl, n-Propyl, Isopropyl, n-Butyl, sek.-Butyl, tert.-Butyl, Isobutyl, n-Pentyl, n-Hexyl, Dodecyl, Octadecyl, Cyclohexyl.

Vorzugsweise ist in den Silanen der allgemeinen Formel I der Index m = 1. Bei höheren Werten von m besteht die Gefahr, daß die Härte des Materials abnimmt, falls zuviel derartiges Silan eingesetzt wird.

Spezielle Beispiele für die organofunktionellen Silane der Formel I sind: Bis-(dimethylamino)methylphenylsilane, Bis-(mono-n-butylamino)dimethylsilane, 2-Chloroethyltrichlorosilane, 2-Chloraethylmethyldichlorosilane, Di-n-Butyldichlorsilane, Diethyldiethoxysilane, Ethyltrimethoxysilane, 8-Bromooctyltrichlorosilane, 3-Bromopropyltrichlorsilane, t-Butyltrichlorosilane, 1-Chloroethyltrichlorosilane, Chloromethyltrichlorsilane, Chlorophenyltrichlorsilane, Cyclohexyltrichlorsilane, Dimethyldichlorsilane, Diphenyldichlorsilane, Ethyldichlorosilane. Besonders bevorzugt sind Phenyltrimethoxysilan, Aminopropyltriethoxysilan und Propyltrimethoxysilan. Sämtliche Silane und weitere sind käuflich erwerbbar z.B. bei ABCR GmbH & Co., Postfach 210135, D-7500 Karlsruhe 21.

In den organofunktionellen Silanen der allgemeinen Formel II (Komponente 1) besitzen X und m die vorstehend beschriebene Bedeutung. Der Rest R''' bzw. der Substituent muß grundsätzlich dabei so ausgestaltet sein, daß er für eine Quervernetzung geeignet ist. Der Rest R''' kann dabei sein: Alkyl, Alkenyl, Alkinyl, Aryl, Arylalkyl, Alkylaryl, Arylalkenyl, Alkenylaryl, Arylalkinyl oder Alkinylaryl. Diese Reste können wieder wie bei dem organofunktionellen Silan der allgemeinen Formel I durch O- oder S-Atome oder die Gruppe NR'' unterbrochen sein. Der Rest R''' kann dabei auch einen oder mehrere vernetzbare Substituenten aus der Gruppe der Halogene und der gegebenenfalls substituierten Amino-, Amid-, Aldehyd, Keto-, Alkylcarbonyl, Carboxy-, Mercapto-, Cyano-, Hydroxy-, Alkoxy, Alkoxycarbonyl-, Sulfonsäure-, Phosphorsäure-, Acryloxy-, Methacryloxy-, Epoxy- oder Vinylgruppen tragen.

Spezielle Beispiele für ein vernetzbares organofunktionelles Silan der allgemeinen Formel II sind Vinyltrimethoxysilan, Aminopropyltriethoxysilan, Isocyanatopropyltriethoxysilan, Mercaptopropyltrimethoxysilan, Vinyltriethoxysilane, Vinylethyldichlorsilane, Vinylmethyldiacetoxysilane, Vinylmethyldichlorosilane, Vinylmethyldiethoxysilane, Vinyltriacetoxysilane, Vinyltrichlorsilane, Phenylvinyldiethoxysilane, Phenylallyldichlorsilane, 3-Isocyanotopoxyltriethoxysilane, Methacryloxypropenyltrimethoxylsilane, 3-Methacryloxypropyltrimethoxysilane. Besonders bevorzugt ist Methacryloxypropyltrimethoxysilan und 3-Glycidyloxypropyltrimethoxysilan. Diese und weitere Silane sind vom selben Hersteller, wie vorstehend beschrieben, beziehbar.

Erfindungsgemäß verwendbare Metallverbindungen sind insbesondere solche mit der Summenformel MeR_{y} (III), in welcher die Reste R, die gleich oder verschieden sein können, Halogen, Alkyl, Alkoxy, Acryloxy oder Hydroxy bedeuten. Beispiele für bevorzugte Metalle sind Al, Ti oder Zr, y ist dann entsprechend entweder 3 für Al oder 4. Ganz besonders bevorzugt ist Al. Bevorzugt (Anspruch 2) werden die Metallverbindungen der allgemeinen Formel (III), bevor sie der hydrolytischen Kondensation unterworfen werden, mit einem gängigen Chelatliganden im Verhältnis 1:0,5 - 2 chelatisiert. Als günstig hat sich dabei ein Verhältnis von ca. 1:1 erwiesen. Als Chelatliganden kommen alle gängigen Chelatliganden, insbesondere Acetylaceton oder Acetessigsäureethylester in Frage.

Konkrete Beispiele für erfindungsgemäß verwendbare Metallverbindungen sind z. B. in der DE 38 28 098, bzw. der 34 07 087 offenbart, die dann mit den entsprechenden Chelatliganden chelatisiert werden.

Anstelle der monomeren Ausgangssilane können gegebenenfalls auch vorkondensierte, im Reaktionsmedium lösliche Oligomere dieser Silane eingesetzt werden; d.h. geradkettige oder zyklische niedermolekulare Teilkondensate (Polyorganosiloxane) mit einem Kondensationsgrad von z.B. etwa 2 bis 100, insbesondere etwa 2 bis 6. Entsprechendes gilt für die Metallkomponente (III). Desweiteren können auch fluorierte Silane wie in der EP 0 358 011 A2 beschrieben, eingesetzt werden.

Als vierte Komponente können im Reaktionsmedium gegebenenfalls lösliche schwerflüchtige Oxide oder derartige schwerflüchtige Oxide bildende Verbindungen von Elementen der Hauptgruppe Ia bis Va oder deren Nebengruppen IIb, IIIb, Vb bis VIIIb des Periodensystems mit Ausnahme von Aluminium eingesetzt werden. Unter den schwerflüchtigen Oxiden sind B₂O₃, P₂O₅ und SnO₂ besonders bevorzugt.

Zur Quervernetzung werden dabei Präpolymere eingesetzt, bei denen die reagierenden vernetzbaren Gruppen des Restes R''' und/oder des vernetzbaren Substituenten am Rest R''' mit den reagierenden Gruppen am Präpolymer vernetzbar sind. Hierzu zählen bevorzugt "gleichnamige" Präpolymere. Nach der Erfindung werden unter gleichnamige vernetzbare "Präpolymere" solche verstanden, bei denen die reagierenden Gruppen identisch sind. Im Falle von Epoxygruppen enthaltenden Silanen wird Epoxydharz eingesetzt, im Falle von acrylgruppenhaltigen Silanen werden Acrylate eingesetzt, allgemein werden im Fall von Acryloxygruppenhaltigen Resten Acrylate verwendet. Im Fall von Vinylresten bzw. Resten mit anderen polymerisierbaren Doppelbindungen werden Präpolymere mit vernetzbaren Doppelbindungen eingesetzt.

Die Erfindung umfaßt auch die folgenden Vernetzungsmöglichkeiten:
Mercaptogruppenhaltige Silane und Präpolymere mit vernetzbaren Doppelbindungen, Isocyanatgruppenhaltige Silane und Polyole, Hydroxygruppenhaltige Silane und Isocyanate, Aminogruppenhaltige Silane und Epoxidharze. Teilweise enthalten Mischungen aus epoxygruppenhaltigen Silanen und Epoxidharzen auch Silane mit Aminoalkylresten. Hier kann die Aminogruppe sowohl mit der Epoxyeinheit am Silan als auch mit dem Epoxidharz vernetzen.

Zur Herstellung der Beschichtung werden nun die organofunktionellen Silane der allgemeinen Formel II und gegebenenfalls I unter Eiskühlung gerührt. Im Anschluß daran wird die Metallverbindung der allgemeinen Formel III chelatisiert oder ohne Chelatligand zugegeben. Im Anschluß daran wird die hydrolytische Kondensation durchgeführt. Zu dieser Reaktionsmischung wird dann ein mit dem Rest R''' vernetzbares Präpolymer zugesetzt. Bevorzugterweise kann dann durch übliche Lacklösemittel die Viskosität der Mischung auf den gewünschten Wert eingestellt werden.

Die so erhaltene Mischung wird nun auf ein Substrat aufgetragen und ausgehärtet.

Vorzugsweise verwendet man zur Herstellung der erfindungsgemäßen Beschichtung 10 bis 95 Mol%, insbesondere 20 bis 90 Mol% und besonders bevorzugt 30 bis 90 Mol% der Komponente 1, 5 bis 75 Mol%, insbesondere 5 bis 60 Mol% und besonders bevorzugt 10 bis 40 Mol% der Komponente 2 und 0 bis 60 Mol%, insbesondere 0 bis 50 Mol% und besonders bevorzugt 0 bis 40 Mol% der Komponente 3 und höchstens 0 bis 70 Mol%, höchstens 0 bis 40 Mol% der Komponente 4.

Komponente 1 ist dabei entsprechend Anspruch 1 das vernetzbare Silan der allgemeinen Formel II. Komponente 2 ist die Metallverbindung der Formel III und Komponente 3 ist das nicht vernetzbare Silan der allgemeinen Formel I.

Besonders vorteilhaft ist es (Anspruch 3), wenn die hydrolytische Kondensation zunächst so durchgeführt wird, daß eine hydrolytische Vorkondensation mit einer geringeren Wassermenge als der zur vollständigen Hydrolyse der hydrolisierbaren Gruppen stöchiometrisch erforderlichen Menge durchgeführt wird und dann das Präpolymer zugegeben wird und anschließend durch Zugabe von weiterem Wasser, das ganz oder teilweise die Hydrolyse der verbleibenden hydrolisierbaren Gruppen bewirkt, weiterkondensiert.

Vorzugsweise erfolgt die Vorkondenstion in Gegenwart eines Kondensationskatalysators. In bezug auf die Verfahrensführung mittels der Vorkondensation wird voll inhaltlich auf die DE-OS 38 28 098 Bezug genommen. Die vorliegende Erfindung schließt hierbei auch alle Kondensationskatalysatoren der vorstehend erwähnten Druckschrift mit ein.

Die Verarbeitung des Beschichtungsmaterials kann nun entweder sofort oder erst nach einigen Wochen erfolgen. Durch die bevorzugte erfindungsgemäße Verwendung der chelatisierten Metallverbindung wie der Quervernetzung ist es nun möglich, das Beschichtungsmaterial über einen Zeitraum von mehreren Wochen verarbeitbar zu halten. Die Beschichtung kann dann mit allen, aus dem Stand der Technik bekannten Verfahren, wie Tauchen, Fluten, Gießen, Schleudern, Spritzen, Walzen oder Aufstreichen durchgeführt werden. Als Substrate für die Beschichtung eignen sich beliebige Werkstoffe, wie z.B. Metalle, Kunststoffe, Keramik, Glas, Papier oder Holz. Die Beschichtung kann dabei in verschiedenen Schichten von z.B. 1 bis 100 µm, vorzugsweise 2 bis 30 µm aufgetragen werden. Bevorzugt ist es dabei (Anspruch 10), daß man die gehärtete Beschichtung chemisch und/oder physikalisch vorzugsweise mit Laser-(UV)-Strahlung, nachbehandelt.

Die Erfindung betrifft auch die mit dem erfindungsgemäßen Verfahren beschichteten Substrate. Erfindungsgemäß werden dazu Substrate mit dem vorstehend beschriebenen Verfahren beschichtet.

Die Erfindung betrifft weiterhin ein Beschichtungsmaterial zum Herstellen von Beschichtungen auf Substraten. Gemäß den kennzeichnenden Merkmalen des Anspruchs 12 wird dazu aus den vorstehend beschriebenen organofunktionellen Silanen ein hydrolytisches Kondensat hergestellt und dann in einem zweiten Schritt zu diesem hydrolytischen Kondensat ein organisches vernetzbares Präpolymer des entsprechenden Restes R''' zugegeben. Es ist dabei wiederum, analog dem Verfahren, bevorzugt, daß die hydrolytische Kondensation zuerst in Form einer hydrolytischen Vorkondensation, der Komponenten 1 bis 4, mit einer geringeren Wassermenge als der zur vollständigen Hydrolyse nötigen Wassermenge durchgeführt wird und daß anschließend das Präpolymer zugegeben und dann weiterkondensiert wird.

Das Beschichtungsmaterial kann dabei übliche Additive (Anspruch 15) und Kondensationskatalysatoren enthalten. Bei den üblichen Additiven ist es bevorzugt, organische Verdünnungsmittel, Verlaufmittel, Färbemittel, UV-Stabilisatoren, Füllstoffe, Viskositätsregler, Gleitmittel, Netzmittel, Antiabsetzmittel, Oxidationsinhibitoren oder Mischungen dieser Stoffe einzusetzen. Vorzugsweise erfolgt dabei die Vorkondensation im Falle der bevorzugten Ausführungsform nach Anspruch 3, in Gegenwart eines Kondensationskatalysators. Als Kondensationskatalysatoren eignen sich Protonen oder Hydroxylionen abspaltende Verbindungen und Amine. Die Erfindung schließt hierbei wieder alle in der DE-OS 38 28 098 offenbarten Kondensationskatalysatoren mit ein. Gemäß Anspruch 17 ist es vorteilhaft, daß die Viskosität auf 0 bis 50 m Pa.s eingestellt wird, insbesondere auf ca. 15 m Pa.s.

Mit dem erfindungsgemäßen Beschichtungsmaterial, bzw. mit dem erfindungsgemäßen Verfahren zum Herstellen von beschichteten Substraten, werden Beschichtungen auf Substraten erreicht, die sich neben hoher Kratz- und Abriebfestigkeit und ausgezeichneter Haftung auf verschiedenen Substraten (vor allem Glas und verschiedenen Metallen) vor allem durch ihre dauerhafte Haftung (nach verschiedenen Witterungstests) und sehr guter Beständigkeit gegenüber alkalischen Lösungen auszeichnen. Die Eigenschaften des beschichteten Materials bleiben erhalten, selbst wenn das Beschichtungsmaterial erst nach einer bestimmten Lagerzeit aufgetragen wird (mehrere Wochen). Da die Viskosität der Beschichtungsmasse nur sehr langsam steigt (von ca. 12 auf ca. 17m Pa.s nach 6 Wochen Lagerzeit), können auch nach 6 Wochen Lagerungen Beschichtungen mit hervorragenden Eigenschaften erhalten werden.

Das Beschichtungsmaterial läßt sich zudem sehr gut mit bekannten Farbstoffen einfärben sowie durch Zugabe von Aerosilen und ggf. Farbpigmenten (je nach Anforderung) zu Siebdruck-fähigen Pasten verarbeiten.

Bei den Farbstoffen sind besonders in alkoholischwässriger Lösung lösliche bevorzugt. Derartige Farbstoffe sind z.B. von der Firma Ciba-Geigy unter dem Namen Orasolfarbstoffe im Handel.

Bevorzugt ist das Beschichtungsmaterial auch zum Auftragen einer Sperrschicht gegenüber H₂S geeignet.

Die folgenden Beispiele erläutern die Erfindung näher:

### Beispiel 1

59,5 g Phenyltrimethoxysilan, 460,1 g Glycidyloxypropyltrimethoxysilan und 26,9 g Aminopropyltriethoxysilan werden zusammengegeben und unter Eiskühlung gerührt. 147,8 g Aluminiumsekundärbutylat werden mit 78,1 g Acetessigsäureethylester versetzt und langsam zur Reaktionslösung zugegeben. Unter Rühren und bei Beibehaltung der Eiskühlung werden langsam 182,3 g Wasser vorsichtig zugegeben. Nach Abschluß der Hydrolyse werden 88,6 g Epoxidharz D.E.R. 330 (Dow Corning Company) in das Hydrolysat eingerührt.

Zur Einstellung der Lackeigenschaften können zu diesem Zeitpunkt übliche Lackadditive und Lösemittel (hochsiedende Alkohole und Glykolether) zugegeben werden.

Die Reaktionslösung kann dann durch übliche Verfahren auf verschiedene Substrate aufgebracht werden. Wird das Beschichtungsmaterial im Spritzverfahren auf gereinigte Messingbeschläge aufgebracht, werden nach dem Aushärten (2 Stunden, 160°C) farblose transparente Beschichtungen erhalten, die sich durch gute Haftung und Abriebbeständigkeiten auszeichnen.

Ergebnisse:
a) nach 130 Stunden Salzsprühnebeltest (DIN 50 021): keinerlei Korrosionsschäden auf der Oberfläche
b) nach 3 Zyklen SO₂-Test (Kesternichtest): einzelne Korrosionspunkte auf der Oberfläche, die im Bereich des Gitterschnitts verstärkt auftreten
c) nach 200 Stunden Schwitzwassertest (DIN 50 017): Gt 0
d) nach 24 Stunden Handschweißbetauung (in Anlehnung an ISO 4538-1978 (E)): einzelne, sehr wenige Korrosionspunkte auf der Oberfläche.

Mit diesem Beschichtungsmaterial wurde zum Test der Sperrwirkung gegen H₂S auch ein Anlauftest für versilberte Artikel durchgeführt.

### Anlauftest für versilberte Artikel

Begasung im "Anlaufkasten"
Volumen Anlaufkasten: 380 l (55 x 80 x 90 cm)
Luftzirkulation durch Ventilator

Durchführung des Anlauftests:
Einstellen eines 2 l Becherglases mit 0,2 ml Ammoniumpolysulfidlösung in 2 l vollentsalztem Wasser auf den Boden des Anlaufkastens.

Beurteilung des Anlaufverhaltens:
1 Stunde - mehrere Tage
vergleichsweise zu reinen Silberoberflächen.

Im Vergleich zu den nach der DE 38 28 098 hergestellten Beschichtungen ist das Ergebnis des erfindungsgemäßen Beschichtungsmaterials deutlich überlegen, sowohl in bezug auf die Handschweißbetauung wie der Topfzeit. Hervorzuheben ist auch die gute Sperrwirkung gegen H₂S.

### Durchgeführte Testmethoden

Die Beschichtungen wurden mit den folgenden Testmethoden nach ihrer Härte, ihrer Abriebfestigkeit, ihrer Haftung und ihrer Beständigkeit nach Lagerung im Feuchtklima bewertet:

### Bestimmung der Abriebfestigkeit (DIN 52347)

Diese Verschleißprüfung nach dem Reibradverfahren dient zur Prüfung des Verhaltens von Glas und durchsichtigem Kunststoff gegen Gleitverschleiß. Die Prüfung wird an ebenen Flächen durchgeführt. Als Meßgröße dient die Zunahme des Streulichtes. Die Probe wird, auf dem Drehteller des Verschleiß-Prüfgerätes liegend, durch zwei sich in entgegengesetzter Richtung drehende Reibräder auf Gleitverschleiß beansprucht (100 Zyklen). Die Reibräder bestehen aus einem definierten feinkörnigen Schleifmittel (Al₂O₃), das in Gummi eingebettet ist. Als Meßgröße für den Verschleiß dient die Zunahme der Streuung des transmittierten Lichtes, die durch die Oberflächenveränderung während des Verschleißversuches bedingt ist. Sie ist zu messen als Grad der gestreuten Transmission T_{d} oder als Trübung T_{d}.

### Beurteilung der Haftung zum Substrat

Die Haftung der Beschichtungen zum Untergrund wurde nach drei verschiedenen Verfahren getestet:
a) Tesafilm-Abrißtest zur Überprüfung der Randhaftung. Ein Streifen eines handelsüblichen Tesafilms (Tesafix 6996) wird am Rand der CD an einer unbeschädigten Stelle des Lackfilms aufgebracht, luftblasenfrei festgedrückt und dann unter einem Winkel von 90° ruckartig abgezogen. Sowohl der Tesastreifen, als auch die so behandelte Lackoberfläche wird auf vorhandenes bzw. abgezogenes Beschichtungsmaterial untersucht. Der Test kann mit neuem Tesafilm an der gleichen Stelle des beschichteten Substrats beliebig wiederholt werden (bis zu 20X).
b) Gitterschnittprüfung (DIN 53151)
   Der Gitterschnitt-Test ist eine einfache empirische Prüfung zur Beurteilung des Haftens von Lacken auf ihrem Untergrund. Ferner können die Sprödigkeit und andere Festigkeitseigenschaften des Lackes beurteilt werden. Hierzu wird mit einem Mehrschneidengerät ein bis auf den Untergrund durchgehendes Schnittmuster mit sechs Schnitten gezogen, so daß ein Gitter mit 25 Quadraten entsteht. Durch mikroskopische Betrachtung der Quadrate und ihren Vergleich mit Referenzbildnern werden Gitterschnitt-Kennwerte von Gt O (sehr gute Haftung) bis Gt 5 (sehr schlechte Haftung) erhalten.
c) Tape Test (ASTM D 3359)
   Diese Prüfung entspricht DIN 53151; vor Beurteilung des Schnittmusters wird jedoch ein Streifen eines handelsüblichen Tesafilms auf der Schnittstelle angebracht und schnell unter einem Winkel von 90° abgezogen. Die anschließende Beurteilung erfolgt nach dem oben erwähnten Prinzip.

### "Schwitzwassertest" (DIN 50017)

Die beschichtete Probe wird 14 Tage lang in einem Wärmeschrank bei 40°C und hoher Luftfeuchtigkeit gelagert. Anschließend wird die Haftung beurteilt und die Ritzhärte bestimmt. Liegen die gefundenen Werte im gleichen Bereich (der Gitterschnitt-Kennwert darf höchstens um eine Einheit abnehmen), wird der Test als bestanden gewertet.

### Beispiel 2

5,9 g Phenyltrimethoxysilan, 48,4 g Glycidyloxypropyltrimethoxysilan und 2,7 g Aminopropyltriethoxysilan werden zusammengegeben und unter Eiskühlung gerührt. 14,8 g Aluminiumsekundärbutylat werden mit 7,8 g Acetessigester versetzt und langsam zur Reaktionslösung zugegeben. Unter Rühren und bei Beibehaltung der Eiskühlung werden langsam 18,2 g Wasser vorsichtig zugegeben. Nach Abschluß der Hydrolyse werden 9,68 g Epoxidharz D.E.R. 330 (Dow Corning Company) in das Hydrolysat eingerührt.

Zur Einstellung der Lackeigenschaften können zu diesem Zeitpunkt übliche Lackadditive und Lösemittel (hochsiedende Alkohole und Glykolether) zugegeben werden.

Die Reaktionslösung kann dann durch übliche Verfahren auf verschiedene Substrate aufgebracht werden. Wird das Beschichtungsmaterial im Tauchverfahren auf im Ultraschallbad (Ethanol und Isopropanol als Lösemittel) gereinigte Silberplatten aufgebracht, werden nach dem Aushärten (2 Stunden, 160°C) farblose transparente Beschichtungen erhalten, die sich durch gute Haftung und Abriebbeständigkeiten auszeichnen und eine gute Sperrwirkung gegenüber H₂S aufweisen.

### Beispiel 3

17,8 g Phenyltrimethoxysilan, 138,3 g 3-Glycidyloxypropyltrimethoxysilan, 9,9 g Aminopropyltriethoxysilan werden unter Eiskühlung gerührt. 44,33 g Aluminiumsekundärbutylat werden mit 23,4 g Acetessigester versetzt und zur Reaktionsmischung gegeben. Nach Zugabe von 3g und dann 6g Wasser wird jeweils 15 min unter Eiskühlung gerührt; nach weiterer Zugabe von 48,6 g Wasser 2 h bei Raumtemperatur weitergerührt.

Zur Mischung werden jetzt 26,79 g Epoxidharz und 0,54g eines Verlaufmittels gegeben. Durch übliche Lacklösemittel wird die Viskosität der Mischung auf ca. 10 mPa.s eingestellt.

Vergleichbare Beschichtungsergebnisse erhält man mit den in der Tabelle ausgeführten Beschichtungsmaterialien.

### Beispiel 4

23,80 g Phenyltrimethoxysilan, 37,25 g Methacryloxypropyltrimethoxysilan und 7,39 g Aluminiumsekundärbutylat werden in einem 3-Halskolben unter Eiskühlung miteinander vermischt. Dann werden 19,23 g destilliertes Wasser zunächst sehr langsam (1/3 der Menge innerhalb von 15 min.) dann etwas schneller (Restmenge in ca. 5 min.) zugetropft. Nach 2 h Rühren bei Raumtemperatur werden 0,16 g eines Verlaufsmittels, 14,61 g Essigsäureethylester, 4 g Tetraacrylat und 2,8 g eines Photoinitiators nacheinander zugegeben. Es entsteht eine klar, niedrigviskose Lösung. Diese wird im Tauchverfahren auf eine Glasplatte aufgetragen und photochemisch mit thermischer Nachbehandlung (entweder 45 min/130 °C oder mittels IR-Strahlung) ausgehärtet.

Auf diese Weise hergestellte Beschichtungen sind farblos, klar und hochtransparent. Sie zeichnen sich aus durch hohe Wisch- und Abriebfestigkeit, gute Chemikalienbeständigkeit sowie einer dauerhaft guten Haftung zum Substrat auch nach verschiedenen Bewitterungstests.

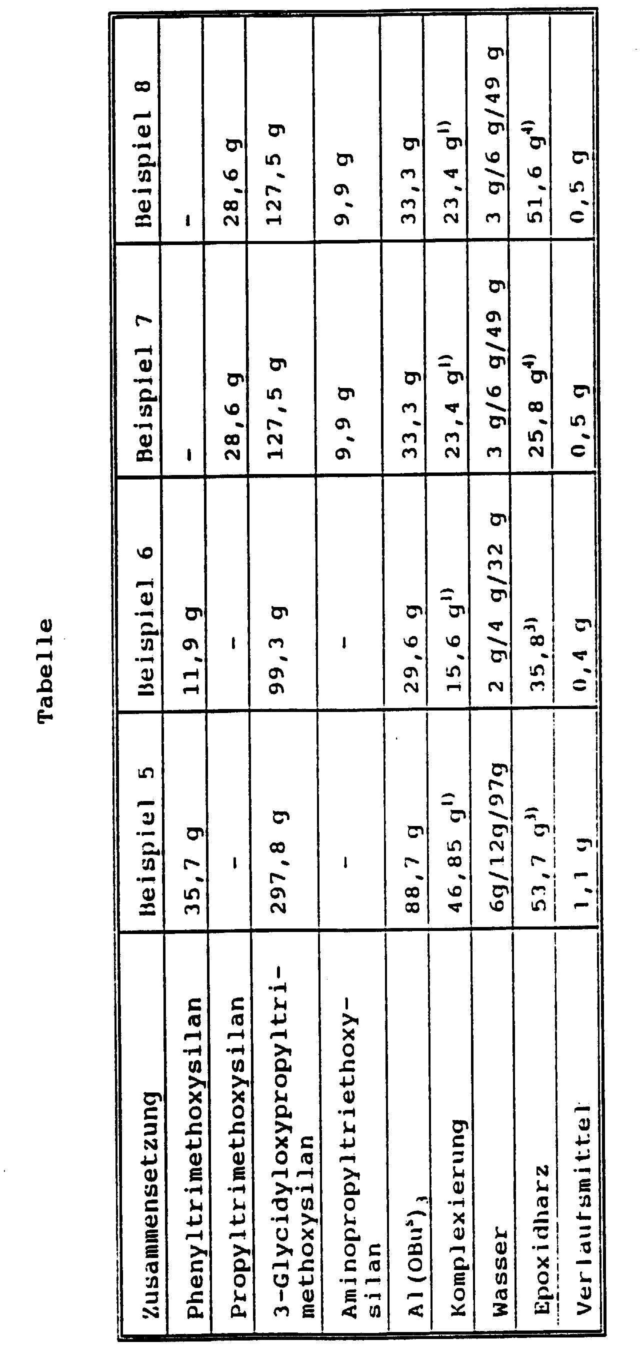

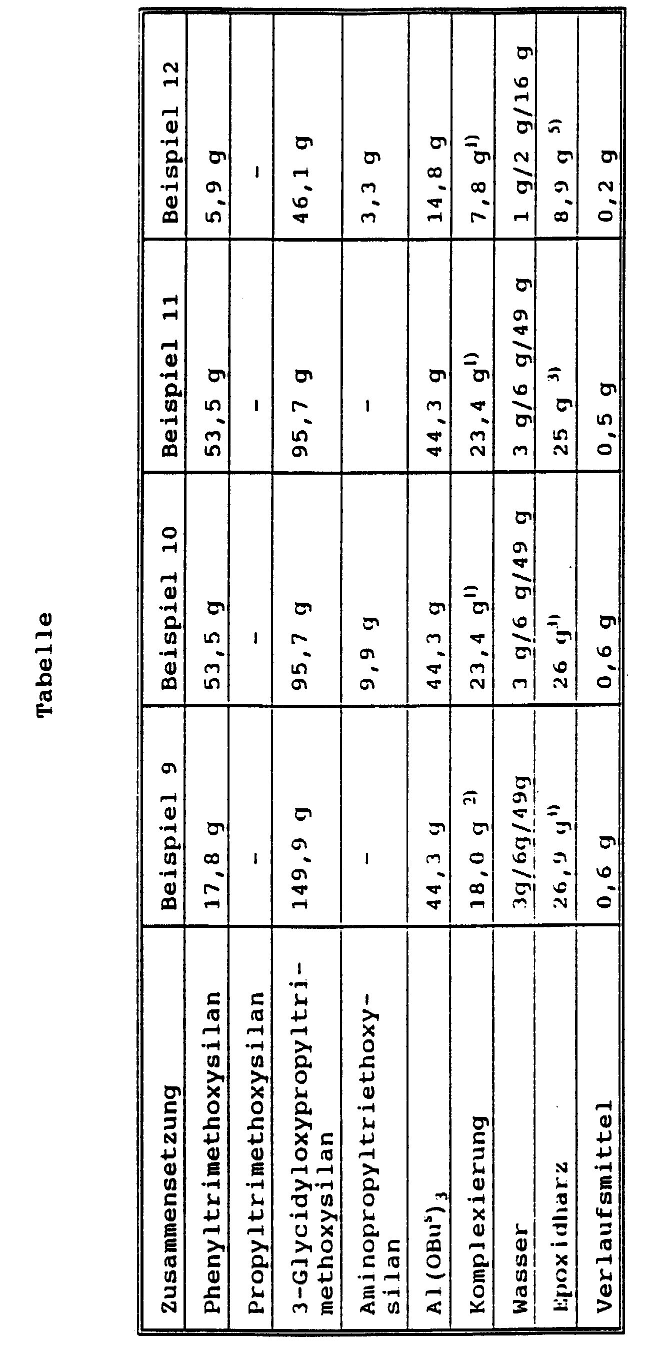

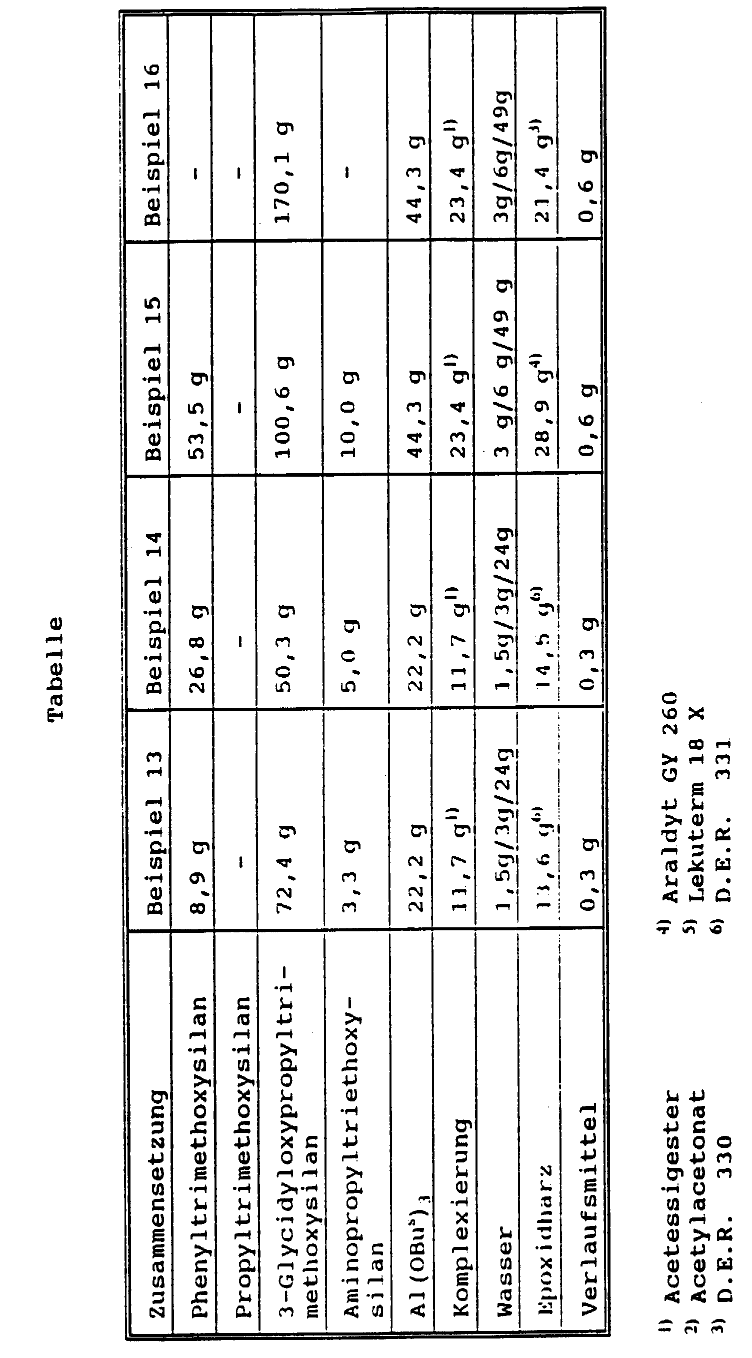

## Patentansprüche

1. Verfahren zur Herstellung von funktionellen Beschichtungen mit organofunktionellen Silanen, einer Metallverbindung und ggf. schwerflüchtigen Oxiden, **gekennzeichnet**
durch die Kombination folgender Merkmale:
a) daß man eine hydrolytische Kondensation, ggf. in Anwesenheit eines Kondensationskatalysators und/oder von Additiven, von folgenden Komponenten
1. mindestens einem vernetzbaren organofunktionellen Silan der Formel (II),
R'''ₘSiX₍₄₋ₘ₎ (II)
in der die Gruppen X, die gleich oder verschieden sein können, Wasserstoff, Halogen, Alkoxy, Acyloxy, Alkylcarbonyl, Alkoxycarbonyl oder -NR''₂ (R" = H und/oder Alkyl) bedeuten und die Reste R''', die gleich oder verschieden sein können, Alkyl, Alkenyl, Alkinyl, Aryl, Arylalkyl, Alkylaryl, Arylalkenyl, Alkenylaryl, Arylalkinyl oder Alkinylaryl darstellen, wobei diese Reste durch O- oder S-Atome oder die Gruppe -NR'' unterbrochen sein können und einen oder mehrere Substituenten aus der Gruppe der Halogene und der gegebenenfalls substituierten Amino-, Amid-, Aldehyd-, Keto-, Alkylcarbonyl-, Carboxy-, Mercapto-, Cyano-, Hydroxy-, Alkoxy-, Alkoxycarbonyl-, Sulfonsäure-, Phosphorsäure-, Acryloxy-, Methacryloxy-, Epoxy- oder Vinylgruppen tragen können und m den Wert 1,2 oder 3 hat, und/oder einem davon abgeleiteten Oligomeren, wobei der Rest R''' und/oder der Substituent ein vernetzbarer Rest bzw. Substituent sein muß, in einer Menge von 10 bis 95 Mol%, bezogen auf die Gesamtmolzahl der (monomeren) Ausgangskomponenten;
2. mindestens einer Metallverbindung der allgemeinen Formel III
MeR_{y} (III)
in welcher Me ein Metall, ausgewählt aus der Gruppe Al, Zr, Ti ist, wobei y im Falle von Al Aluminium 3 ist und für Zirkon und Titan 4 und die Reste R, die gleich oder verschieden sein können, Halogen, Alkyl, Alkoxy, Acyloxy oder Hydroxy bedeuten, wobei die soeben genannten Gruppen ganz oder teilweise durch Chelatliganden ersetzt sein können und/oder einem davon abgeleiteten Oligomeren und/oder einem gegebenenfalls komplexierten Metallsalz einer anorganischen oder organischen Säure, in einer Menge von 5 bis 75 Mol-%, bezogen auf die Gesamtmolzahl der (monomeren) Ausgangskomponenten,
3. gegebenenfalls mindestens einem nicht vernetzbaren organofunktionellen Silan der Formel I.
R'ₘSiX₍₄₋ₘ₎ (I)
in der die Gruppen X die gleich oder verschieden sein können, Wasserstoff, Halogen, Hydroxy, Alkoxy, Acyloxy, Alkylcarbonyl, Alkoxycarbonyl oder -NR''₂(R''=H und/oder Alkyl) bedeuten und die Reste R', die gleich oder verschieden sein können, Alkyl, Aryl, Arylalkyl oder Alkylaryl darstellen, wobei diese Reste durch O- oder S-Atome oder die Gruppe -NR" unterbrochen sein können und einen oder mehrere Substituenten aus der Gruppe der Halogene und der gegebenenfalls substituierten Amid-, Aldehyd-, Keto-, Alkylcarbonyl-, Carboxy-, Cyano-, Alkoxy-, Alkoxycarbonyl-Gruppen tragen können und m den Wert 1, 2 oder 3 hat, und/oder einem davon abgeleiteten Oligomeren, in einer Menge von 0 bis 60 Mol-%, bezogen auf die Gesamtmolzahl der (monomeren) Ausgangskomponenten und
4. gegebenenfalls einem oder mehreren im Reaktionsmedium löslichen, schwerflüchtigen Oxid eines Elementes der Hauptgruppe Ia bis Va oder der Nebengruppen IIb, IIIb, Vb bis VIIIb des Periodensystems, mit Ausnahme von Al, und/oder einer oder mehrerer im Reaktionsmedium löslichen, unter den Reaktionsbedingungen ein schwerflüchtiges Oxid bildenden Verbindungen eines dieser Elemente, in einer Menge von 0 bis 70 Mol-%, bezogen auf die Gesamtmolzahl der (monomeren) Ausgangskomponenten;
durchführt;
b) daß man zu diesem hydrolytischen Kondensat ein organisches vernetzbares Präpolymer zugibt, wobei die reagierenden vernetzbaren Gruppen des Restes R''' und/oder des vernetzbaren Substituenten am Rest R''' mit denen am Präpolymer vernetzbar sind, und das Präpolymer in einer Menge von 2 bis 70 Mol-%, bezogen auf die Gesamtmolzahl der (monomeren) Ausgangskomponenten, zusetzt;
c) die so erhaltene Beschichtungslösung auf ein Substrat aufbringt und anschließend aushärtet.

2. Verfahren nach Anspruch 1, dadurch gekennzeichnet, daß die Metallverbindung der allgemeinen Formel III (Komponente 2) in chelatisierter Form zugegeben wird.

3. Verfahren zur Herstellung nach Anspruch 1, dadurch gekennzeichnet, daß statt der Verfahrensschritte a) und b) zunächst eine hydrolytische Vorkondensation mit einer geringeren Wassermenge als der zur vollständigen Hydrolyse der hydrolisierbaren Gruppen stöchiometrisch erforderlichen Menge durchgeführt wird, dann das Präpolymer zugegeben wird und anschließend durch Zugabe von weiterem Wasser, das ganz oder teilweise die Hydrolyse der verbliebenen hydrolisierbaren Gruppen bewirkt, sowie ggf. eines Kondensationskatalysators weiterkondensiert.

4. Verfahren nach Anspruch 1 bis 3, dadurch gekennzeichnet, daß bezogen auf die Gesamtmolzahl der Ausgangskomponenten bevorzugt 20 bis 90, insbesondere 30 bis 90 Mol-% der Komponente 1, 5 bis 60 Mol-%, insbesondere 10 bis 40 Mol-%, der Komponente 2, O bis 50 Mol%, insbesondere 0 bis 40 Mol-% der Komponente 3 und höchstens 0 bis 40 Mol-% der Komponente 4 verwendet werden.

5. Verfahren nach einem der Ansprüche 1 bis 4, dadurch gekennzeichnet, daß die hydrolytische Kondensation bzw. die Weiterkondensation in Gegenwart eines sauren oder basischen Kondensationskatalysators durchgeführt wird.

6. Verfahren nach einem der Ansprüche 3 bis 5, dadurch gekennzeichnet, daß die zur Vorkondensation eingesetzte Wassermenge mittels feuchtigkeitshaltiger Adsorbentien, wasserhaltiger organischer Lösungsmittel, Salzhydraten oder wasserbildender Systeme eingetragen wird.

7. Verfahren nach einem der Ansprüche 1 bis 6, dadurch gekennzeichnet, daß die Additive ausgewählt sind aus organischen verdünnungsmitteln, Verlaufmitteln, Färbemitteln, UV-Stabilisatoren, Füllstoffen, Viskositätsreglern, Gleitmitteln, Netzmitteln, Antiabsetzmitteln oder Oxidationsinhibitoren oder Mischungen davon.

8. Verfahren nach einem der Ansprüche 1 bis 7, dadurch gekennzeichnet, daß man die Substratoberfläche vor der Aufbringung des Beschichtungsmaterials mit einem Primer behandelt, ausheizt, auslaugt, mittels wässriger bzw. organischer Medien vorreinigt und/oder einer elektrischen Entladung aussetzt.

9. Verfahren nach einem der Ansprüche 1 bis 8, dadurch gekennzeichnet, daß man die Beschichtung durch Wärmebehandlung bei einer Temperatur bis 200°C, vorzugsweise 60 bis 160°C und/oder durch Behandlung mit Strahlung, vorzugsweise IR-, UV- oder Mikrowellen, härtet.

10. Verfahren nach einem der Ansprüche 1 bis 9, dadurch gekennzeichnet, daß man die gehärtete Beschichtung chemisch und/oder physikalisch, vorzugsweise mit Laser-(UV)-Strahlung, nachbehandelt.

11. Beschichtete Substrate, insbesondere mit kratzfesten Beschichtungen versehene Substrate, erhältlich nach dem Verfahren eines der Ansprüche 1 bis 10.

12. Beschichtungsmaterial zur Herstellung von Beschichtungen auf Substraten, dadurch gekennzeichnet, daß es erhalten worden ist, dadurch, daß man eine hydrolytische Kondensation, gegebenenfalls in Gegenwart eines Kondensationskatalysators und/oder üblichen Additiven von folgenden Komponenten
1. mindestens einem vernetzbaren organofunktionellen Silan der Formel (II),
R'''ₘSiX₍₄₋ₘ₎ (II)
in der die Gruppen X, die gleich oder verschieden sein können, Wasserstoff, Halogen, Alkoxy, Acyloxy, Alkylcarbonyl, Alkoxycarbonyl oder -NR''₂ (R''= H und/oder Alkyl) bedeuten und die Reste R''', die gleich oder verschieden sein können, Alkyl, Alkenyl, Alkinyl, Aryl, Arylalkyl, Alkylaryl, Arylalkenyl, Alkenylaryl, Arylalkinyl oder Alkinylaryl darstellen, wobei diese Reste durch O- oder S-Atome oder die Gruppe -NR'' unterbrochen sein können und einen oder mehrere Substituenten aus der Gruppe der Halogene und der gegebenenfalls substituierten Amino-, Amid-, Aldehyd-, Keto-, Alkylcarbonyl-, Carboxy-, Mercapto-, Cyano-, Hydroxy-, Alkoxy-, Alkoxycarbonyl-, Sulfonsäure-, Phosphorsäure-, Acryloxy-, Methacryloxy-, Epoxy- oder Vinylgruppen tragen können und m den Wert 1,2 oder 3 hat, und/oder einem davon abgeleiteten Oligomeren, wobei der Rest R''' und/oder der Substituent ein vernetzbarer Rest bzw. Substituent sein muß, in einer Menge von 10 bis 95 Mol%, bezogen auf die Gesamtmolzahl der (monomeren) Ausgangskomponenten;
2. mindestens einer Metallverbindung der allgemeinen Formel III
MeR_{y} (III)
in welcher Me ein Metall, ausgewählt aus der Gruppe Al, Zr, Ti ist, wobei y im Falle von Aluminium 3 und im Falle von Ti und Zr 4 ist und die Reste R, die gleich oder verschieden sein können, Halogen, Alkyl, Alkoxy, Acyloxy oder Hydroxy bedeuten, wobei die soeben genannten Gruppen ganz oder teilweise durch Chelatliganden ersetzt sein können und/oder einem davon abgeleiteten Oligomeren und/oder einem gegebenenfalls komplexierten Aluminiumsalz einer anorganischen oder organischen Säure, in einer Menge von 5 bis 75 Mol-%, bezogen auf die Gesamtmolzahl der (monomeren) Ausgangskomponenten,
3. gegebenenfalls mindestens einem nicht vernetzbaren organofunktionellen Silan der Formel I.
R'ₘSiX₍₄₋ₘ₎ (I)
in der die Gruppen X die gleich oder verschieden sein können, Wasserstoff, Halogen, Hydroxy, Alkoxy, Acyloxy, Alkylcarbonyl, Alkoxycarbonyl oder -NR''₂(R''=H und/oder Alkyl) bedeuten und die Reste R', die gleich oder verschieden sein können, Alkyl, Aryl, Arylalkyl oder Alkylaryl darstellen, wobei diese Reste durch C- oder S-Atome oder die Gruppe -NR" unterbrochen sein können und einen oder mehrere Substituenten aus der Gruppe der Halogene und der gegebenenfalls substituierten Amid-, Aldehyd-, Keto-, Alkylcarbonyl-, Carboxy-, Cyano-, Alkoxy-, Alkoxycarbonyl-Gruppen tragen können und m den Wert 1, 2 oder 3 hat, und/oder einem davon abgeleiteten Oligomeren, in einer Menge von 0 bis 60 Mol-%, bezogen auf die Gesamtmolzahl der (monomeren) Ausgangskomponenten und
4. gegebenenfalls einem oder mehreren im Reaktionsmedium löslichen, schwerflüchtigen Oxid eines Elementes der Hauptgruppe Ia bis Va oder der Nebengruppen IIb, IIIb, Vb bis VIIIb des Periodensystems, mit Ausnahme von Al, und/oder einer oder mehrerer im Reaktionsmedium löslichen, unter den Reaktionsbedingungen ein schwerflüchtiges Oxid bildenden Verbindungen eines dieser Elemente, in einer Menge von 0 bis 70 Mol-%, bezogen auf die Gesamtmolzahl der (monomeren) Ausgangskomponenten;
durchführt;
b) daß man zu diesem hydrolytischen Kondensat ein organisches Präpolymer zugibt, wobei die reagierenden vernetzbaren Gruppen des Restes R''' und/oder des vernetzbaren Substituenten am Rest R''' mit denen am Präpolymer gleichnamig sind,
und das Präpolymer in einer Menge von 2 bis 70 Mol-%, bezogen auf die Gesamtmolzahl der (monomeren) Ausgangskomponenten, zusetzt;
c) die so erhaltene Beschichtungslösung ein Substrat aufbringt und anschließend aushärtet.

13. Beschichtungsmaterial nach Anspruch 12, dadurch gekennzeichnet, daß die Metallverbindung der allgemeinen Formel III (Komponente 2) in chelatisierter Form zugegeben wird.

14. Beschichtungsmaterial nach Anspruch 12 und 13, dadurch gekennzeichnet, daß zur Herstellung des hydrolytischen Kondensats zuerst eine hydrolytische Vorkondensation der Komponenten 1-4, mit einer geringeren Wassermenge als der zur vollständigen Hydrolyse der hydrolysierbaren Gruppen stöchiometrisch erforderlichen Menge durchgeführt wird, dann das Präpolymer zugegeben wird, und daß anschließend durch Zugabe von weiterem Wasser, das ganz oder teilweise die Hydrolyse der verbliebenen hydrolysierbaren Gruppen bewirkt, sowie ggf. eines Kondensationskatalysators weiterkondensiert worden ist.

15. Beschichtungsmaterial nach Anspruch 12 bis 14, dadurch gekennzeichnet, daß die Additive ausgewählt sind aus organischen Verdünnungsmitteln, Verlaufmitteln, Färbemitteln, UV-Stabilisatoren, Füllstoffen, Viskositätsreglern, Gleitmitteln, Netzmitteln, Antiabsetzmitteln, Oxidationsinhibitoren oder Mischungen davon.

16. Beschichtungsmaterial nach Anspruch 12 bis 15, dadurch gekennzeichnet, daß der Kondensationskatalysator ein saurer oder basischer Kondensationskatalysator ist.

17. Beschichtungsmaterial nach Anspruch 12 bis 16, dadurch gekennzeichnet, daß die Viskosität auf 5 bis 50 m Pa.s eingestellt wird.

## Claims

1. A method of preparing functional coatings with organo-functional silanes, a metal compound and optionally oxides of low volatility, characterized by the combination of the following features:
a) a hydrolytic condensation is carried out, optionally in the presence of a condensation catalyst and/or of additives, of the following components:
1. at least one organo-functional silane capable of cross-linking with the formula (II),
R'''ₘSiX₍₄₋ₘ₎ (II)
in which the groups X, which can be the same or different, signify hydrogen, halogen, alkoxy, acyloxy, alkylcarbonyl, alkoxycarbonyl or -NR"₂ (R"=H and/or alkyl) and the residues R"', which can be the same or different, represent alkyl, alkenyl, alkynyl, aryl, arylalkyl, alkylaryl, arylalkenyl, alkenylarl, arylalkynyl or alkynylaryl, wherein these residues can be interrupted by O or S atoms or the group -NR" and can carry one or more substituents from the group of the halogens and the possibly substituted amino, amide, aldehyde, keto, alkylcarbonyl, carboxy, mercapto, cyano, hydroxy, alkoxy, alkoxycarbonyl, sulphonic acid, phosphoric acid, acryloxy, methacryloxy, epoxy and vinyl groups and m has the value 1, 2 or 3, and/or an oligomer derived therefrom, wherein the residue R''' and/or the substituent must be a residue or substituent capable of cross-linking, in an amount of 10 to 95 mol%, referred to the total number of moles of the (monomeric) starting components;
2. at least one metal compound of the general formula III
MeR_{y} (III)
in which Me is a metal selected from the group Al, Zr, Ti, wherein y is 3 in the case of Al aluminium and is 4 for zirconium and titanium and the residues R, which can be the same or different, signify halogen, alkyl, alkoxy, acyloxy or hydroxy, wherein the groups thus recited can be replaced wholly or in part by chelate ligands and/or an oligomer derived therefrom and/or an optionally complexed metal salt of an inorganic or organic acid, in an amount of 5 to 75 mol%, referred to the total number of moles of the (monomeric) starting components;
3. optionally at least one organo-functional silane not capable of cross-linking with the formula I:
R'ₘSiX₍₄₋ₘ₎ (I)
in which the groups X can be the same or different and signify hydrogen, halogen, hydroxy, alkoxy, acyloxy, alkylcarbonyl, alkoxycarbonyl or -NR"₂ (R" = H and/or alkyl) and the residues R', which can be the same or different, represent alkyl, aryl, arylalkyl or alkylaryl, wherein these residues can be interrupted by O or S atoms or the group -NR" and can carry one or more substituents from the group of the halogens and optionally substituted amide, aldehyde, keto, alkylcarbonyl, carboxy, cyano, alkoxy, alkoxycarbonyl groups and m has the value 1, 2 or 3, and/or an oligomer derived therefrom, in an amount of 0 to 60 mol%, referred to the total number of moles of the (monomeric) starting components; and
4. optionally one or more oxides which are soluble in the reaction medium and of low volatility, of an element of the main groups Ia to Va or the subsidiary groups IIb, IIIB, Vb to VIIIb of the periodic system, with the exception of Al, and/or one or more compounds of one of these elements which are soluble in the reaction medium and form an oxide of low volatility under the reaction conditions, in an amount of 0 to 70 mol%, referred to the total number of moles of the (monomeric) starting components;
b) in that an organic pre-polymer which is capable of cross-linking is added to this hydrolytic condensate, wherein the reacting cross-linkable groups of the residue R''' and/or of the cross-linkable substituents on the residue R''' can cross-link with those on the pre-polymer and the pre-polymer is added in an amount of 2 to 70 mol%, referred to the total number of moles of the (monomeric) starting components;
c) the coating solution thus obtained is applied to a substrate and then hardened.

2. A method according to claim 1, characterized in that the metal compound of the general formula III (component 2) is added in chelated form.

3. A method of preparation according to claim 1, characterized in that, instead of the method steps a) and b) a hydrolytic pre-condensation is firstly carried out with a smaller amount of water than is stoichiometrically necessary for the complete hydrolysis of the hydrolysable groups, the pre-polymer is then added and then it is further condensed by addition of further water and optionally a condensation catalyst which effects the hydrolysis of the remaining hydrolysable groups wholly or partially.

4. A method according to claim 1 to 3, characterized in that, in relation to the total number of moles of the starting components there are used preferably 20 to 90 and especially 30 to 90 mol% of the component 1, 5 to 60 mol%, especially 10 to 40 mol% of the component 2, 0 to 50 mol%, especially 0 to 40 mol% of the component 3 and 0 to 40 mol% at the most of the component 4.

5. A method according to any of claims 1 to 4, characterized in that the hydrolytic condensation or the further condensation is carried out in the presence of an acid or basic condensation catalyst.

6. A method according to any of claims 3 to 5, characterized in that the amount of water used for the pre-condensation is introduced by means of adsorbents rtaining moisture, organic solvents containing water, salt hydrates or water-forming systems.

7. A method according to any of claims 1 to 6, characterized in that the additives are selected from organic thinners, flow-control agents, colouring agents, UV stabilisers, fillers, viscosity regulators, lubricants, wetting agents, anti-settling agents or oxidation inhibiters or mixtures thereof.

8. A method according to any of claims 1 to 7, characterized in that the substrate surface is treated with a primer, heated, lixivated, pre-treated with aqueous or organic media and/or subjected to an electric discharge, before the application of the coating material.

9. A method according to any of claims 1 to 8, characterized in that the coating is hardened by heat treatment at a temperature up to 200°C, preferably 60 to 160°C and/or by treatment with radiation, preferably IR, UV or microwaves.

10. A method according to any of claims 1 to 9, characterized in that the hardened coating is post-treated chemically and/or physically, preferably by laser (UV) radiation.

11. Coated substrates, especially provided with scratch-resistant coatings, obtainable according to the method of any of claims 1 to 10.

12. A coating material for preparing coatings on substrates, characterized in that it is obtained in that a hydrolytic condensation is carried out, optionally in the presence of a condensation catalyst and/or of additives, of the following components:
1. at least one organo-functional silane capable of cross-linking with the formula (II),
R'''ₘSiX₍₄₋ₘ₎ (II)
in which the groups X, which can be the same or different, signify hydrogen, halogen, alkoxy, acyloxy, alkylcarbonyl, alkoxycarbonyl or -NR"₂ (R" =H and/or alkyl) and the residues R''', which can be the same or different, represent alkyl, alkenyl, alkynyl, aryl, arylalkyl, alkylaryl, arylalkenyl, alkenylarl, arylalkynyl or alkynylaryl, wherein these residues can be interrupted by O or S atoms or the group -NR" and can carry one or more substituents from the group of the halogens and the possibly substituted amino, amide, aldehyde, keto, alkylcarbonyl, carboxy, mercapto, cyano, hydroxy, alkoxy, alkoxycarbonyl, sulphonic acid, phosphoric acid, acryloxy, methacryloxy, epoxy and vinyl groups and m has the value 1, 2 or 3, and/or an oligomer derived therefrom, wherein the residue R"' and/or the substituent must be a residue or substituent capable of cross-linking, in an amount of 10 to 95 mol%, referred to the total number of moles of the (monomeric) starting components;
2. at least one metal compound of the general formula III
MeR_{y} (III)
in which Me is a metal selected from the group Al, Zr, Ti, wherein y is 3 in the case of aluminium and is 4 for zirconium and titanium and the residues R, which can be the same or different, signify halogen, alkyl, alkoxy, acyloxy or hydroxy, wherein the groups thus recited can be replaced wholly or in part by chelate ligands and/or an oligomer derived therefrom and/or an optionally complexed aluminium salt of an inorganic or organic acid, in an amount of 5 to 75 mol%, referred to the total number of moles of the (monomeric) starting components;
3. Optionally at least one organo-functional silane not capable of cross-linking with the formula I:
R'ₘSiX₍₄₋ₘ₎ (I)
in which the groups X can be the same or different and signify hydrogen, halogen, hydroxy, alkoxy, acyloxy, alkylcarbonyl, alkoxycarbonyl or -NR"₂ (R" = H and/or alkyl) and the residues R', which can be the same or different, represent alkyl, aryl, arylalkyl or alkylaryl, wherein these residues can be interrupted by O or S atoms or the group -NR" and can carry one or more substituents from the group of the halogens and optionally substituted amide, aldehyde, keto, alkylcarbonyl, carboxy, cyano, alkoxy, alkoxycarbonyl groups and m has the value 1, 2 or 3, and/or an oligomer derived therefrom, in an amount of 0 to 60 mol%, referred to the total number of moles of the (monomeric) starting components; and
4. optionally one or more oxides which are soluble in the reaction medium and of low volatility, of an element of the main groups Ia to Va or the subsidiary groups IIb, IIIB, Vb to VIIIb of the periodic system, with the exception of Al, and/or one or more compounds of one of these elements which are soluble in the reaction medium and form an oxide of low volatility under the reaction conditions, in an amount of 0 to 70 mol%, referred to the total number of moles of the (monomeric) starting components;
b) in that an organic pre-polymer which is capable of cross-linking is added to this hydrolytic condensate, wherein the reacting cross-linkable groups of the residue R''' and/or of the cross-linkable substituents on the residue R''' have the same name as those on the pre-polymer and the pre-polymer is added in an amount of 2 to 70 mol%, referred to the total number of moles of the (monomeric) starting components;
c) the coating solution thus obtained is applied to a substrate and then hardened.

13. A coating material according to claim 12, characterized in that the metal compound of the general formula III (component 2) is added in chelated form.

14. A coating material according to claim 12 and 13, characterized in that in order to produce the hydrolytic condensate, firstly a hydrolytic pre-condensation of the components 1 to 4 is carried out with a smaller amount of water than is stoichiometrically necessary for the complete hydrolysis of the groups which can be hydrolysed, then the pre-polymer is added and that then it is further condensed by the addition of further water which effects hydrolysis of the remaining hydrolysable groups wholly or partially, as well as optionally a condensation catalyst.

15. A coating material according to claim 12 to 14, characterized in that the additives are selected from organic thinners, flow-control agents, colouring agents, UV stabilisers, fillers, viscosity regulators, lubricants, wetting agents, anti-settling agents or oxidation inhibiters or mixtures thereof.

16. A coating material according to claim 12 to 15, characterized in that the condensation catalyst is an acid or basic condensation catalyst.

17. A coating material according to claim 12 to 16, characterized in that the viscosity is adjusted to 5 to 50 m Pa.s.

## Revendications

1. Procédé de préparation de revêtements fonctionnels avec des silanes organofonctionnels, un composé métallique et le cas échéant des oxydes peu volatils,
caractérisé par la combinaison des caractéristiques suivantes :
a) en ce qu'on réalise une condensation hydrolytique, le cas échéant en présence d'un catalyseur de condensation et/ou d'additifs, des composants suivants :
1. au moins un silane organofonctionnel de formule (II),
R'''ₘSiX₍₄₋ₘ₎ (II)
où les groupes X, qui peuvent être identiques ou différents, représentent un hydrogène, halogène, alcoxy, acyloxy, alkylcarbonyle, alcoxycarbonyle ou -NR"₂ (R" = H et/ou alkyle),
et les radicaux R"' qui peuvent être identiques ou différents représentent un alkyle, alcényle, alcynyle, aryle, arylalkyle, alkylaryle, arylalcényle, alcénylaryle, arylalcynyle ou alcynylaryle, ces restes pouvant être interrompus par des atomes de O ou de S ou le groupe -NR" et pouvant porter un ou plusieurs substituants du groupe des halogènes et des groupes éventuellement substitués :
amino, amide, aldéhyde, céto-, alkylcarbonyle, carboxy, mercapto, cyano, hydroxy, alcoxy, alcoxycarbonyle, acide sulfonique, acide phosphorique, acryloxy, méthacryloxy, époxy ou vinyle et m a la valeur 1,2 ou 3, et/ou un de leurs oligomères qui en dérive, tandis qu'il faut que le radical R"' et/ou le substituant soit un radical ou un substituant réticulable, en une quantité de 10 à 95 % molaires, par rapport au nombre de moles total des composants de départ (monomères),
2. au moins un composé métallique de formule générale (III),
MeR_{y} (III),
où Me est un métal choisi dans le groupe Al, Zr, Ti, où y est 3 dans le cas de l'aluminium Al et est 4 pour le zirconium et le titane, et les radicaux R, qui peuvent être identiques ou différents, représentent un halogène, alkyle, alcoxy, acyloxy ou hydroxy tandis que les groupes déjà cités peuvent être remplacés en totalité ou en partie par des ligands de chélate et/ou un oligomère qui en dérive et/ou un sel de métal complexé le cas échéant d'un acide minéral ou organique, en une quantité de 5 à 75 % molaire, par rapport au nombre de moles total des composants de départ (monomères),
3. le cas échéant au moins un silane organofonctionnel non réticulable de formule I,
R'ₘSiX₍₄₋ₘ₎ (II)
où les groupes X, qui peuvent être identiques ou différents, représentent un hydrogène, halogène, hydroxy, alcoxy, acyloxy, alkylcarbonyle, alcoxycarbonyle ou -NR"₂ (R"=H et/ou alkyle),
et les radicaux R' qui peuvent être identiques ou différents représentent un alkyle, aryle, arylalkyle ou alkylaryle, tandis que ces radicaux peuvent être interrompus par des atomes de O ou de S ou le groupe -NR" et peuvent porter un ou plusieurs substituants du groupe des halogènes et des groupes éventuellement substitués, amide, aldéhyde, céto, alkylcarbonyle, carboxy, cyano, alcoxy-, alcoxycarbonyle, et m a la valeur 1,2 ou 3, et/ou un oligomère qui en dérive, en une quantité de 0 à 60 % molaire, par rapport au nombre de moles total des composants de départ (monomères) et,
4. le cas échéant un ou plusieurs oxydes peu volatiles solubles dans le milieu réactionnel d'un élément du groupe principal Ia à Va ou d'un sous groupe IIb, IIIb, Vb ou VIIIb du tableau périodique, à l'exception de Al et/ou un ou plusieurs composés d'un de ces éléments solubles dans le milieu réactionnel formant un oxyde peu volatil dans les conditions de réaction, en une quantité de 0 à 70 % molaires, par rapport au nombre de moles total des composants de départ (monomères),
b) en ce qu'on ajoute à ce condensat hydrolytique un prépolymère réticulable organique, où les groupes réticulables réactifs du radical R"' et/ou du substituant réticulable sur le radical R"' sont réticulables avec ceux du prépolymère et que le prépolymère est ajouté en une quantité de 2 à 70 % molaires, par rapport au nombre de moles total des composants de départ (monomères),
c) on dépose la solution de revêtement ainsi obtenue sur un substrat et ensuite on durcit.

2. Procédé selon la revendication 1,
caractérisé en ce qu'
on ajoute le composé métallique de formule générale III (composant 2) sous forme chélatée.

3. Procédé de préparation selon la revendication 1,
caractérisé en ce qu'
à la place des étapes de procédé a) et b) on réalise d'abord une précondensation hydrolytique avec une quantité d'eau inférieure à celle nécessaire à l'hydrolyse complète stoechiométrique des groupes hydrolysables, ensuite on ajoute le prépolymère et ensuite on poursuit la condensation par addition d'eau supplémentaire qui réalise l'hydrolyse totale ou partielle des groupes hydrolysables restant ainsi que d'un catalyseur de condensation le cas échéant.

4. Procédé selon les revendications 1 à 3,
caractérisé en ce que
par rapport au nombre total de moles des composants de départ on utilise de préférence 20 à 90, notamment 30 à 90 % molaires du composant 1, 5 jusqu'à 60 % molaires, notamment 10 à 40 % molaires du composant 2, 0 à 50 % molaires, notamment 0 à 40 % molaires du composant 3 et au plus de O à 40 % molaires du composant 4.

5. Procédé selon l'une des revendications 1 à 4,
caractérisé en ce qu'
on réalise la condensation hydrolytique ou la poursuite de la condensation en présence d'un catalyseur de condensation acide ou basique.

6. Procédé selon l'une des revendications 3 à 5,
caractérisé en ce qu'
on incorpore la quantité d'eau nécessaire à la précondensation au moyen d'adsorbants contenant de l'humidité, de solvants organiques contenant de l'eau, d'hydrates de sels ou de systèmes formant de l'eau.

7. Procédé selon l'une des revendications 1 à 6,
caractérisé en ce qu'
on choisit les additifs parmi des diluants organiques, des agents de nivellement, des colorants, des stabilisants aux UV, des charges, des régulateurs de viscosité, des lubrifiants, des agents mouillants, des agents anti-sédimentation, des inhibiteurs d'oxydation ou des mélanges de ces substances.

8. Procédé selon l'une des revendications 1 à 7,
caractérisé en ce qu'
on traite la surface du substrat avec un primaire avant de déposer le matériau de revêtement, on chauffe, on lessive, on nettoie au moyen de milieux aqueux ou organiques et/ou on expose à une décharge électrique.

9. Procédé selon l'une des revendications 1 à 8,
caractérisé en ce qu'
on fait durcir le revêtement par traitement thermique à une température pouvant atteindre 200°C, de préférence 60 à 160°C et/ou par traitement avec un rayonnement, de préférence IR, UV ou des micro-ondes.

10. Procédé selon l'une des revendications 1 à 9,
caractérisé en ce qu'
on post-traite le revêtement chimiquement et/ou physiquement de préférence avec du rayonnement laser ou UV.

11. Substrats revêtus, notamment substrats munis de revêtements résistant à la rayure, qu'on obtient selon le procédé d'une des revendications 1 à 10.

12. Matériau de revêtement pour réaliser des revêtements sur des substrats,
caractérisé en ce qu'
on obtient une condensation hydrolytique, le cas échéant en présence d'un catalyseur de condensation et/ou d'additifs usuels, des composants suivants :
1. au moins un silane organofonctionnel de formule (II),
R'''ₘSiX₍₄₋ₘ₎ (II)
où les groupes X, qui peuvent être identiques ou différents, représentent un hydrogène, halogène, alcoxy, acyloxy, akylcarbonyle, alcoxycarbonyle ou -NR"₂ (R"=H et/ou alkyle),
et les restes R"' qui peuvent être identiques ou différents représentent un alkyle, alcényle, alcynyle, aryle, arylalkyle, alkylaryle, arylalcényle, alcénylaryle, arylalcynyle ou alcynylaryle, tandis que ces restes peuvent être interrompus par des atomes de O ou de S ou le groupe -NR" et peuvent porter un ou plusieurs substituants du groupe des halogènes et des groupes éventuellement substitués :
amino, amide, aldéhyde, céto-, alkylcarbonyle, carboxy, mercapto, cyano, hydroxy, alcoxy, alcoxycarbonyle, acide sulfonique, acide phosphorique, acryloxy, méthacryloxy, époxy ou vinyle et m a la valeur 1,2 ou 3, et/ou un de leurs oligomères qui en dérive, le radical R"' et/ou le substituant devant être un radical ou un substituant réticulable, en une quantité de 10 à 95 % molaire, par rapport au nombre de moles total des composants de départ (monomères),
2. au moins un composé métallique de formule générale (III),
MeR_{y} (III),
où Me est un métal choisi dans le groupe Al, Zr, Ti, où y est 3 dans le cas de l'aluminium Al et est 4 pour le zirconium et le titane, et les radicaux R, qui peuvent être identiques ou différents, représentent un halogène, alkyle, alcoxy, acyloxy ou hydroxy, où les groupes déjà cités peuvent être remplacés en totalité ou en partie par des ligands de chélate et/ou un oligomère qui en dérive et/ou un sel de métal complexé le cas échéant d'un acide minéral ou organique, en une quantité de 5 à 75 % molaire, par rapport au nombre de moles total des composants de départ monomères,
3. le cas échéant au moins un silane organofonctionnel non réticulable de formule I,
R'ₘSiX₍₄₋ₘ₎ (II)
où les groupes X, qui peuvent être identiques ou différents, représentent un hydrogène, halogène, hydroxy alcoxy, acyloxy, alkylcarbonyle, alcoxycarbonyle ou -NR"₂ (R"=H et/ou Alkyle),
et les radicaux R' qui peuvent être identiques ou différents représentent un alkyle, aryle, arylalkyle ou alkylaryle, tandis que ces radicaux peuvent être interrompus par des atomes de O ou de S ou le groupe -NR" et peuvent porter un ou plusieurs substituants du groupe des halogènes et des groupes éventuellement substitués, amide, aldéhyde, céto, alkylcarbonyle, carboxy, cyano, alcoxy-, alcoxycarbonyle, et m a la valeur 1,2 ou 3, et/ou un de leurs oligomères qui en dérive, en une quantité de 0 à 60 % molaires, par rapport au nombre de moles total des composants de départ (monomères) et,
4. le cas échéant un ou plusieurs oxydes peu volatiles solubles dans le milieu réactionnel d'un élément du groupe principal Ia à Va ou d'un sous groupe IIb, IIIb, Vb ou VIIIb du tableau périodique, à l'exception de Al et/ou un ou plusieurs composés d'un de ces éléments solubles dans le milieu réactionnel formant un oxyde peu volatil dans les conditions de réaction, en une quantité de 0 à 70 % molaires, par rapport au nombre de moles total des composants de départ (monomères),
b) en ce qu'on ajoute à ce condensat hydrolytique un prépolymère réticulable organique, où les groupes réticulables réactifs du radical R"' et/ou du substituant réticulable sur le radical R''' sont de même nom que ceux du prépolymère et que le prépolymère est une quantité de 2 à 70 % molaires, par rapport au nombre de moles total des composants de départ (monomères),
c) on dépose la solution de revêtement ainsi obtenue sur un substrat et ensuite on durcit.

13. Matériau de revêtement selon la revendication 12,
caractérisé en ce qu'.
on ajoute le composé métallique de formule générale III (composant 2) sous forme chélatée.

14. Matériau de revêtement selon les revendications 12 et 13,
caractérisé en ce que
pour réaliser le condensat hydrolytique on réalise d'abord une précondensation hydrolytique des composants 1-4 avec une quantité d'eau inférieure à celle nécessaire à l'hydrolyse complète stoechiométrique des groupes hydrolysables, ensuite on ajoute le prépolymère et ensuite on poursuit la condensation par addition d'eau supplémentaire qui réalise l'hydrolyse totale ou partielle des groupes hydrolysables restant ainsi que d'un catalyseur de condensation le cas échéant.

15. Matériau de revêtement selon les revendications 12 à 14,
caractérisé en ce qu'
on choisit les additifs parmi des diluants organiques, des agents de dénivellement, des colorants, des stabilisants aux UV, des charges, des régulateurs de viscosité, des lubrifiants, des agents mouillants, des agents anti-sédimentation, des inhibiteurs d'oxydation ou des mélanges de ces substances.

16. Matériau de revêtement selon les revendications 12 à 15,
caractérisé en ce que
le catalyseur de condensation est un catalyseur de condensation acide ou basique.

17. Matériau de revêtement selon les revendications 12 à 16,
caractérisé en ce qu'
on ajuste la viscosité entre 5 et 50 mPas.
